(19) Europäisches Patentamt
European Patent Office
Office européen des brevets

(11) **EP 4 345 773 A1**

(12) **EUROPEAN PATENT APPLICATION**
published in accordance with Art. 153(4) EPC

(43) Date of publication:
**03.04.2024 Bulletin 2024/14**

(21) Application number: **22895015.0**

(22) Date of filing: **22.11.2022**

(51) International Patent Classification (IPC):
***G06V 20/58*** (2022.01)

(52) Cooperative Patent Classification (CPC):
**G06V 10/40; G06V 20/58**

(86) International application number:
**PCT/CN2022/133480**

(87) International publication number:
**WO 2023/088486 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.11.2021  CN 202111385472**

(71) Applicant: **China Faw Co., Ltd.**
**Changchun, Jilin 130011 (CN)**

(72) Inventors:
• **CHEN, Dandan**
**Changchun, Jilin 130011 (CN)**

• **CUI, Maoyuan**
**Changchun, Jilin 130011 (CN)**
• **SUN, Lianming**
**Changchun, Jilin 130011 (CN)**
• **TAN, Mingwei**
**Changchun, Jilin 130011 (CN)**
• **JIANG, Yunpeng**
**Changchun, Jilin 130011 (CN)**
• **SONG, Linhuan**
**Changchun, Jilin 130011 (CN)**
• **LIU, Yang**
**Changchun, Jilin 130011 (CN)**

(74) Representative: **Penza, Giancarlo**
**Bugnion S.p.A.**
**Viale Lancetti, 17**
**20158 Milano (IT)**

(54) **LANE LINE EXTRACTION METHOD AND APPARATUS, VEHICLE AND STORAGE MEDIUM**

(57)    The disclosure discloses a method and apparatus for extracting a lane line, a vehicle, and a storage medium. The method includes: a current position point of a vehicle and high-precision map data are obtained, wherein the high-precision map data includes lane line data and planned path data of the vehicle; target lane line data within a set lane line length in front of a lane where the vehicle is located is extracted from the lane line data based on the current position point and the planned path data; and curve fitting is performed on the target lane line data to obtain a lane line.

Fig. 1

A current position point of a vehicle and high-precision map data are obtained, wherein the high-precision map data includes lane line data and planned path data of the vehicle — S110

Target lane line data within a set lane line length in front of a lane where the vehicle is located is extracted from the lane line data of the high-precision map data based on the current position point and the planned path data — S120

Curve fitting is performed on the target lane line data to obtain a lane line — S130

EP 4 345 773 A1

## Description

### Cross-Reference to Related Application

The disclosure claims the priority to Chinese Patent Application No. 202111385472.X, filed with the Chinese Patent Office on November 22, 2021, which is incorporated in its entirety herein by reference.

### Technical Field

Examples of the disclosure relate to the technical field of lane line detection, and particularly relates to a method and apparatus for extracting a lane line, a vehicle, and a storage medium.

### Background

Development of the artificial intelligence technology has promoted rapid growth of the autonomous driving technology. In the field of autonomous driving, a vehicle automatically collects environmental information and drives automatically according to the environmental information. Lane line detection is an essential basic function of autonomous vehicles.

By means of image sensors such as a camera mounted in the front of the vehicle, a lane line identification system based on machine vision collects road images in front of the vehicle, and identifies and extracts a lane line from the images. During lane line identification, a lane line in the lane line image collected by the image sensor is fairly incomplete due to influences of weather, ground light reflection or heavy wear of the lane line, which tremendously reduces accuracy of lane line identification.

### Summary

Examples of the disclosure provide a method and apparatus for extracting a lane line, a vehicle, and a storage medium, so as to reduce constraint conditions of lane line identification and improve accuracy of lane line identification.

An example of the disclosure provides a method for extracting a lane line. The method includes: a current position point of a vehicle and high-precision map data are obtained, wherein the high-precision map data includes lane line data and planned path data of the vehicle; target lane line data within a set lane line length in front of a lane where the vehicle is located is extracted from the lane line data based on the current position point and the planned path data; and curve fitting is performed on the target lane line data to obtain a lane line.

An example of the disclosure further provides an apparatus for extracting a lane line. The apparatus includes: an obtaining module configured to obtain a current position point of a vehicle and high-precision map data, wherein the high-precision map data includes lane line data and planned path data of the vehicle; an extraction module configured to extract target lane line data within a set lane line length in front of a lane where the vehicle is located from the lane line data of the high-precision map data based on the current position point and the planned path data; and a fitting module configured to perform curve fitting on the target lane line data to obtain a lane line.

An example of the disclosure further provides a vehicle. The vehicle includes a memory, a processor, and a computer program stored in the memory and runnable in the processor, where the processor implements the method for extracting a lane line according to any one of the examples of the disclosure when executing the computer program.

An example of the disclosure further provides a computer-readable storage medium. The computer-readable storage medium stores a computer program, where the computer program implements the method for extracting a lane line according to any one of the examples of the disclosure when executed by a processor.

### Brief Description of the Drawings

The accompanying drawings required in examples will be described briefly below. It should be understood that the following accompanying drawings illustrate only some examples of the disclosure and should not be construed as limitation on the scope. Those of ordinary skill in the art can still derive other related accompanying drawings from these accompanying drawings without creative efforts.

Fig. 1 is a flowchart of a method for extracting a lane line in Example 1 of the disclosure;

Fig. 2 is a flowchart of a method for extracting a lane line in Example 2 of the disclosure;

Fig. 3 is a schematic structural diagram of an apparatus for extracting a lane line in Example 3 of the disclosure; and

Fig. 4 is a schematic structural diagram of a vehicle in Example 4 of the disclosure.

### Detailed Description of the Embodiments

The disclosure will be described below with reference to accompanying drawings and in conjunction with examples. It can be understood that specific examples described herein are merely used to explain the disclosure, rather than limit the disclosure. In addition, it should be noted that, for convenience of description, only structures related to the disclosure are shown in the accompanying drawings.

It should be noted that similar numerals and letters denote similar items in the following accompanying drawings, and therefore, once an item is defined in one accompanying drawing, it does not need to be defined and explained in the subsequent accompanying drawings. Moreover, in the description of the disclosure, the terms "first", "second", etc. are used merely to distinguish between descriptions and cannot be understood as indication or implication of relative importance.

Example 1

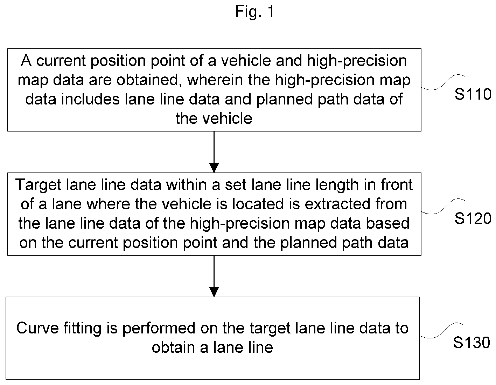

Fig. 1 is a flowchart of a method for extracting a lane line in Example 1 of the disclosure. The example is applicable to a case of extracting a lane line based on a high-precision map. The method may be executed by an apparatus for extracting a lane line in the example of the disclosure, and the apparatus may be implemented in software and/or hardware.

As shown in Fig. 1, the method includes the following steps:

S110, a current position point of a vehicle and high-precision map data are obtained, wherein the high-precision map data includes lane line data and planned path data of the vehicle.

A high-precision map refers to a map with high precision and fine definition. Precision of the map may reach a decimeter level, such that a plurality of lanes may be distinguished. The fine definition indicates that the high-precision map stores various traffic elements in traffic scenes in a formatted storage mode, that is, the high-precision map data may include road network data, lane network data, lane line data and traffic signs of a traditional map. After a planned path of the vehicle is determined in the high-precision map based on the current position point of the vehicle, a destination to be reached by the vehicle and road environmental information, the high-precision map data further includes the planned path data of the vehicle, which is used to indicate a lane corresponding to the planned path of the vehicle in the high-precision map.

It should be noted that the high-precision map data is stored in the high-precision map in a formatted mode by storing the lane line data in the high-precision map in the form of layers based on changes of straight lengths, diversion, merging and curvature of lanes, and assigning lane identities to the lanes in each layer.

For example, 0 m-500 m lane data and 500 m-1000 m lane data of a 1000 m straight lane are stored in lane layers with lane identities of R01 and R02, respectively; and a right-turn lane with a length of 400 m at a right side of an R02 lane is stored in a lane layer with a lane identity of R03, and a left-turn lane with a length of 300 m at a left side of an R02 lane is stored in a lane layer with a lane identity of R04. The high-precision map further stores lane line layers, which are used to store lane line data of two sides of a lane.

The high-precision map data includes the lane line data and the planned path data of the vehicle, wherein the lane line data is a sequence formed by boundary points on a boundary line of the lane, and the planned path data is a sequence formed by planned track points of the vehicle. The current position point of the vehicle indicates two-dimensional position coordinates of the vehicle in the high-precision map. Any method in the related art may be used to determine the current position point and the planned path of the vehicle, which are not limited in the disclosure.

S120, target lane line data within a set lane line length in front of a lane where the vehicle is located is extracted from the lane line data of the high-precision map data based on the current position point and the planned path data.

The target lane line data is a sequence formed by boundary points on a boundary line of a lane within the set lane line length, which are extracted from the lane line data of high-precision map data.

The set lane line length is a length of a lane line to be extracted in each period and may be set according to actual road conditions or user requirements.

A lane layer corresponding to the planned path is determined based on the planned path data and the current position point, lane line layer data stored in a lane line layer is obtained based on a lane identity (ID) corresponding to the lane layer, and the lane line data with the set lane line length is intercepted from the lane line layer data to serve as the target lane line data.

Alternatively, the set lane line length is determined according to at least one of the following conditions: a vehicle speed and a road curvature change degree.

For example, in a high-speed scene, the vehicle speed is relatively high and the road curvature change degree is relatively low, and a lane line length to be fitted is great, such that the set lane line length is a first lane line length; and in a low-speed scene, the vehicle speed is relatively low and the road curvature change degree is relatively high, a short lane line may be fitted to satisfy requirements of vehicle control, and it is unnecessary to fit a long lane line to waste computational power, such that the set lane line length is a second lane line length. The second lane line length is smaller than the first lane line length.

S130, curve fitting is performed on the target lane line data to obtain a lane line.

The target lane line data may be described as a sequence formed by points in a series of vehicle coordinates $(x_0, y_0)$, $(x_1, y_1)$, $(x_2, y_2)$, ..., $(x_n, y_n)$, wherein n is the number of data points in the target lane line data, and n may be determined according to a length of the target lane line and sampling frequency of the high-precision map data. Any curve fitting method in the related art may be used to perform curve fitting on the target lane line data to obtain the lane line, for example, by calling a curve fitting function or a user-defined curve fitting algorithm, which is not limited in the example of the disclosure.

For example, a cubic curve fitting method is used to perform curve fitting on the target lane line data,

to obtain the lane line, wherein a cubic curve fitting equation is $y' = C_0 + C_1x + C_2x^2 + C_3x^3$, and $C_0, C_1, C_2, C_3$ are all fitting parameters. The data points of the target lane line data are substituted into the cubic curve fitting equation in sequence to obtain

$$y_i' = C_0 + C_1 x_i + C_2 x_i^2 + C_3 x_i^3$$

, $i=1,2,3, ..., n$. The set of fitting parameters $C_0, C_1, C_2, C_3$ are computed based on a least square method, $\Sigma|y_i - y_i'|$ is minimized, $(x_i,y_i)$ indicates coordinates of an ith data point in the target lane line data, and $y_i'$ is an expected value corresponding to $y_i$.

According to the technical solution of the example, the current position point of the vehicle and the high-precision map data are obtained, wherein the high-precision map data includes the lane line data and the planned path data of the vehicle; the target lane line data within the set lane line length in front of the lane where the vehicle is located is extracted from the lane line data based on the current position point and the planned path data; and curve fitting is performed on the target lane line data to obtain the lane line. The lane line may be extracted based on the high-precision map, such that a problem that a traditional method for identifying a lane line on the ground by means of an image collection device has low accuracy of lane line identification due to constraints of weather, ground light reflection and wear of a lane line is solved, the method may be used independently or in combination with the traditional method for identifying a lane line, constraint conditions of lane line identification are reduced, and accuracy of lane line identification is improved.

Example 2

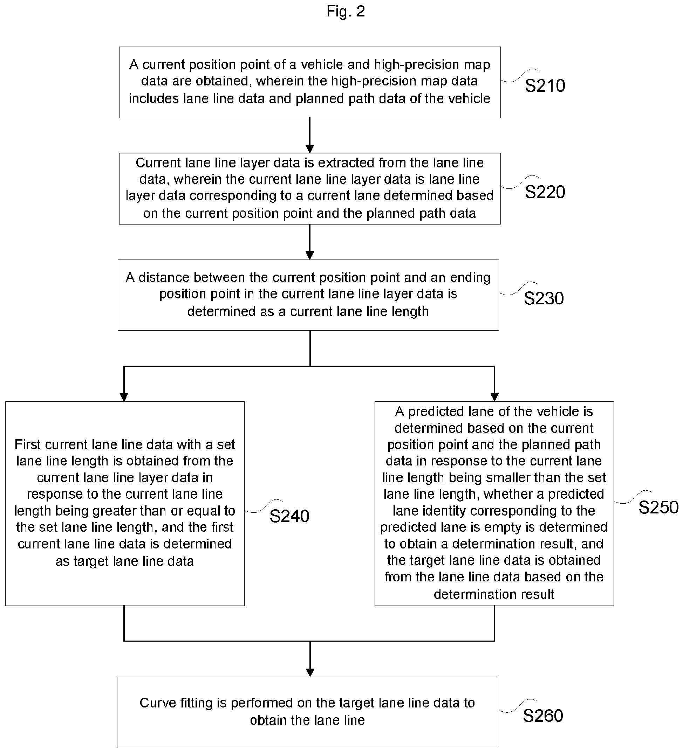

Fig. 2 is a flowchart of a method for extracting a lane line in Example 2 of the disclosure. Based on the above example, the example illustrates S120 that target lane line data within a set lane line length in front of a lane where the vehicle is located is extracted from the lane line data based on the current position point and the planned path data.

As shown in Fig. 2, the method of the example includes the following steps:

S210, a current position point of a vehicle and high-precision map data are obtained, wherein the high-precision map data includes lane line data and planned path data of the vehicle.

S220, current lane line layer data is extracted from the lane line data, wherein the current lane line layer data is lane line layer data corresponding to a current lane determined based on the current position point and the planned path data.

The current lane where the vehicle is located is determined according to the current position point and the planned path data, and the current lane line layer data corresponding to the current lane is extracted from the lane line data on the basis of a current lane ID.

S230, a distance between the current position point and an ending position point in the current lane line layer data is determined as a current lane line length.

A data size corresponding to the current lane line layer data is determined according to a storage mode of the high-precision map, and lane line layer data sizes corresponding to different lane IDs may be different. The ending position point in the current lane line layer data refers to a position point farthest from the current position point in a current vehicle advancing direction stored in the current lane line layer data.

The current lane line layer data is a sequence formed by a series of position points, the ending position point of the current lane line layer data is determined, and according to the number of data points between the current position point and the ending position point and sampling frequency (m/s) of lane line layer data in the high-precision map, the distance between the current position point and the ending position point is computed and determined as the current lane line length.

S240, first current lane line data with a set lane line length is obtained from the current lane line layer data in response to the current lane line length being greater than or equal to the set lane line length, and the first current lane line data is determined as target lane line data.

The first current lane line data with the set lane line length is obtained from the current lane line layer data in a vehicle advancing direction in response to the current lane line length being greater than or equal to the set lane line length, and serves as the target lane line data. The target lane line data is used to determine the target lane line, that is, to obtain the target lane line with the set lane line length.

S250, a predicted lane of the vehicle is determined based on the current position point and the planned path data in response to the current lane line length being smaller than the set lane line length, whether a predicted lane identity corresponding to the predicted lane is empty is determined to obtain a determination result, and the target lane line data is obtained from the lane line data based on the determination result.

The predicted lane refers to a lane in front of the vehicle, which is determined according to the planned path.

If the current lane line length is smaller than the set lane line length, a length of a current lane line is not enough to determine a lane line. It needs to determine the predicted lane of the vehicle in an advancing direction according to the current position point and the planned path data, and extract the lane line from the predicted lane, so as to make a length of the target lane line data reach the set lane line length. There may be no road in front of the vehicle in some cases, such that whether the predicted lane identity corresponding to the predicted lane is empty is determined to obtain a determination result, and the target lane line data is obtained from the lane line data according to the determination result.

S260, curve fitting is performed on the target lane line data to obtain the lane line.

According to the technical solution of the example, the current position point of the vehicle and the high-precision map data are obtained, wherein the high-precision map data includes the lane line data and the planned path data of the vehicle; the target lane line data within the set lane line length in front of the lane where the vehicle is located is extracted from the lane line data based on the current position point and the planned path data; and curve fitting is performed on the target lane line data to obtain the lane line. The lane line may be extracted based on the high-precision map, such that a problem that a traditional method for identifying a lane line on the ground by means of an image collection device has low accuracy of lane line identification due to constraints of weather, ground light reflection and wear of a lane line is solved, the method may be used independently or in combination with the traditional method for identifying a lane line, constraint conditions of lane line identification are reduced, and accuracy of lane line identification is improved.

Alternatively, S240 that first current lane line data with a set lane line length is obtained from the current lane line layer data includes the following steps that a projection point corresponding to the current position point in the current lane line layer data is determined, wherein the projection point is a boundary point obtained by projecting the current position point on a current lane boundary line; boundary points contained in the current lane boundary line with the set lane line length and started from the projection point in the current lane line layer data are obtained; and a sequence formed by the boundary points is determined as the first current lane line data.

The current position point of the vehicle is projected on the lane line, the projection point of the current position point in the current lane line layer data is determined, the boundary points contained in a lane boundary line with the set lane line length in the current lane line layer data are intercepted with the projection point as a starting point, and the sequence formed by the boundary points is determined as the first current lane line data.

For example, if coordinates of the current position point are $(x_0, y_0)$, coordinates of the projection point corresponding to the current position point in the current lane line layer data are $(x_1, y_1)$, and $y_0 = y_1$. If the set lane line length is 100 m, the boundary points in the current lane line layer data are obtained and include $(x_1, y_1)$, $(, y_2)$, ... , $(x_m, y_m)$. $(x_m, y_m)$ is an ending point in the first current lane line data. If data sampling frequency of the current lane line layer data is $f_s$, $(m-1)f_s = 100$ m.

Alternatively, S250 that the target lane line data is obtained from the lane line data on the basis of a determination result includes the following steps:

S251, second current lane line data with the current lane line length is obtained from the current lane line layer data in response to the determination result indicating that the predicted lane identity is empty, and the second current lane line data is determined as the target lane line data.

In response to the predicted lane identity being empty, it indicates that there is no predicted road in front of the current lane. The second current lane line data with the current lane line length and taking the projection point as a starting point is obtained from the current lane line layer data, and the second current lane line data is determined as the target lane line data.

For example, in response to the current lane line layer data being position coordinates of boundary points on a current lane boundary line with a length of 100 m and the current position point is a data point at 45 m in the current lane line layer data, the second current lane line data formed by the position coordinates of the boundary points on the current lane boundary line from 45 m to 100 m in the current lane line layer data is obtained, and the second current lane line data is determined as the target lane line data.

S252, predicted lane line layer data corresponding to the predicted lane is extracted from the lane line data in response to the determination result indicating that the predicted lane identity is not empty, and a predicted lane line length corresponding to the predicted lane line layer data is determined.

The predicted lane line layer data refers to data stored in a predicted lane line layer, and the data is position coordinates of boundary points on a boundary line of the predicted lane.

In response to the predicted lane identity being not empty, it indicates that there is a predicted road in front of the current lane, the predicted lane line layer data is extracted from the lane line data, and the predicted lane line length corresponding to the predicted lane line layer data is determined. The predicted lane line length is determined based on the number of predicted lane line layer data and data sampling frequency of the predicted lane line layer.

S253, whether the sum of the predicted lane line length and the current lane line length is smaller than the set lane line length is determined; in response to the sum of the predicted lane line length and the current lane line length being not smaller than the set lane line length, S254 is executed, and in response to the sum of the predicted lane line length and the current lane line length being smaller than the set lane line length, S255 is executed.

S254, first predicted lane line data with a first length is obtained from the predicted lane line layer data, wherein the first length is a length difference between the set lane line length and the current lane line length; and a set of the second current lane line data and the first predicted lane line data is determined as the target lane line data, and a determination process is ended.

For example, if the predicted lane line length is 150 m, the current lane line length is 45 m, the set lane line length is 100 m, and the sum of the predicted lane line length and the current lane line length is greater than or equal to the set lane line length, the length difference between the set lane line length and the current lane line length is determined to be 55 m, and the predicted lane line data of 0 m-55 m is obtained from the predicted lane line layer data. The current lane line data and the predicted lane line data are merged to obtain the target lane line data corresponding to the lane line with a length of 100 m.

S255, a preliminary predicted lane of the vehicle is determined based on the planned path data, preliminary predicted lane line layer data corresponding to the preliminary predicted lane is extracted from the lane line data, and a preliminary predicted lane line length corresponding to the preliminary predicted lane line layer data is determined; the predicted lane line length and the preliminary predicted lane line length are accumulated to obtain a total predicted lane line length; and the total predicted lane line length is determined as the predicted lane line length until the sum of the total predicted lane line length and the current lane line length is greater than the set lane line length, and S256 is executed.

In an example, if the predicted lane line length is 10 m, the current lane line length is 45 m, the set lane line length is 100 m, and the sum of the predicted lane line length and the current lane line length is smaller than the set lane line length, the preliminary predicted lane of the vehicle is determined based on the planned path, the preliminary predicted lane line layer data is obtained, and a preliminary predicted lane line length corresponding to the lane line layer data is determined. If the preliminary predicted lane line length is 50 m, the predicted lane line length and the preliminary predicted lane line length are accumulated to obtain the total predicted lane line length of 60 m, that is, the predicted lane line length is updated to 60 m. If the sum of the total predicted lane line length and the current lane line length is 105 m and is greater than the set lane line length of 100 m, S254 is executed to obtain the target lane line data corresponding to the lane line with a length of 100 m.

In another example, if the predicted lane line length is 10 m, the current lane line length is 45 m, the set lane line length is 100 m, and the sum of the predicted lane line length and the current lane line length is smaller than the set lane line length, a first preliminary predicted lane of the vehicle is determined based on the planned path, first preliminary predicted lane line layer data is obtained, and a first preliminary predicted lane line length corresponding to the lane line layer data is determined. If the first preliminary predicted lane line length is 30 m, the predicted lane line length and the first preliminary predicted lane line length are accumulated to obtain the total predicted lane line length of 40 m. If the sum of the predicted lane line length and the current lane line length is 85 m, S255 is executed again as follows: a second preliminary predicted lane of the vehicle is determined based on the planned path, second preliminary predicted lane line layer data is obtained, and a second preliminary predicted lane line length corresponding to the lane line layer data is determined. If the second preliminary predicted lane line length is 40 m, the predicted lane line length and the second preliminary predicted lane line length are accumulated to obtain the total predicted lane line length of 80 m, and the sum of the total predicted lane line length and the current lane line length is 125 m and is greater than the set lane line length of 100 m.

S256, the second predicted lane line data with the predicted lane line length is obtained from the predicted lane line layer data; preliminary predicted lane line data with a second length is obtained from the preliminary predicted lane line layer data, wherein the second length is the sum of the set lane line length minus the current lane line length and a second predicted lane line length; and a set of the second current lane line data, the second predicted lane line data and the preliminary predicted lane line data is determined as the target lane line data.

For example, in the above examples, if the current lane line length is 45 m, the predicted lane line length is 10 m, the first preliminary predicted lane line length is 30 m, the second preliminary predicted lane line length is 40 m, and the set lane line length is 100 m, the second predicted lane line data with a length of 10 m is obtained from the predicted lane line layer data; first preliminary predicted lane line data with a length of 30 m is obtained from the first preliminary predicted lane line layer data; and second preliminary predicted lane line data with a length of 15 m is obtained from the second preliminary predicted lane line layer data. A set of the second current lane line data, the predicted lane line data and the preliminary predicted lane line data is determined as the target lane line data.

Alternatively, before the preliminary predicted lane line layer data corresponding to the preliminary predicted lane is extracted from the lane line data, the method further includes the following steps that predicted lane line data with the predicted lane line length is obtained from the predicted lane line layer data in response to a lane identity corresponding to the preliminary predicted lane being empty, and a set of the second current lane line data and the predicted lane line data is determined as the target lane line data.

For example, in the above examples, if the current lane line length is 45 m, the predicted lane line length is 10 m, the first preliminary predicted lane line length is 30 m, the set lane line length is 100 m, and the lane identity corresponding to the second preliminary predicted lane is empty, the second current lane line data with a length of 45 m is obtained from the current lane line layer data; second predicted lane line data with a length of 10 m is obtained from the predicted lane line layer data; and first preliminary predicted lane line data with a length of 30 m is obtained from the first preliminary predicted lane line layer data. A set of the second current lane line data, the predicted lane line data and the first preliminary predicted lane line data is determined as the target lane line data with a length of 85 m.

Example 3

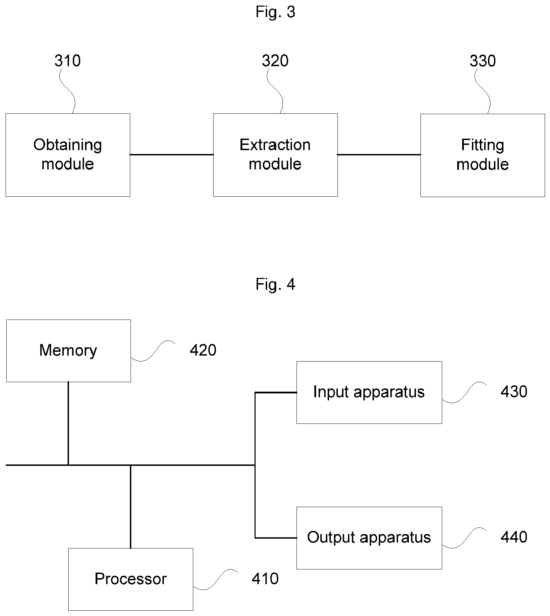

Fig. 3 is a schematic structural diagram of an apparatus for extracting a lane line in Example 3 of the disclosure. The example is applicable to a case of extracting a lane line based on a high-precision map. The apparatus may be implemented in software and/or hardware, and may be integrated in a vehicle. As shown in Fig. 3, the apparatus for extracting a lane line includes: an obtaining module 310, an extraction module 320, and a fitting module 330.

The obtaining module 310 is configured to obtain a current position point of a vehicle and high-precision map data, wherein the high-precision map data includes lane line data and planned path data of the vehicle. The extraction module 320 is configured to extract target lane line data within a set lane line length in front of a lane where the vehicle is located from the lane line data of the high-precision map data based on the current position point and the planned path data. The fitting module 330 is configured to perform curve fitting on the target lane line data, so as to obtain a lane line.

Alternatively, the extraction module 320 includes: an extraction unit, configured to extract current lane line layer data from the lane line data, where the current lane line layer data is lane line layer data corresponding to a current lane determined based on the current position point and the planned path data; a first determination unit, configured to determine a distance between the current position point and an ending position point in the current lane line layer data as a current lane line length; a second determination unit, configured to obtain first current lane line data with the set lane line length from the current lane line layer data in response to the current lane line length being greater than or equal to the set lane line length, and determine the first current lane line data as the target lane line data; and an obtaining unit, configured to determine a predicted lane of the vehicle based on the current position point and the planned path data in response to the current lane line length being smaller than the set lane line length, determine whether a predicted lane identity corresponding to the predicted lane is empty to obtain a determination result, and obtain the target lane line data from the lane line data based on the determination result.

Alternatively, the second determination unit is configured to determine a projection point corresponding to the current position point in the current lane line layer data, wherein the projection point is a boundary point obtained by projecting the current position point on a current lane boundary line; obtain boundary points contained in the current lane boundary line with the set lane line length and started from the projection point in the current lane line layer data; and determine a sequence formed by the boundary points as the first current lane line data.

Alternatively, the obtaining unit includes: a determination sub-unit, configured to obtain second current lane line data with the current lane line length from the current lane line layer data if the determination result indicates that the predicted lane identity is empty, and determine the second current lane line data as the target lane line data; and an obtaining sub-unit, configured to extract predicted lane line layer data corresponding to the predicted lane from the lane line data in response to the determination result indicating that the predicted lane identity is not empty, determine a predicted lane line length corresponding to the predicted lane line layer data, and obtain the target lane line data from the predicted lane line layer data based on the predicted lane line length and the current lane line length.

Alternatively, the obtaining sub-unit is configured to determine whether the sum of the predicted lane line length and the current lane line length is smaller than the set lane line length; obtain first predicted lane line data with a first length from the predicted lane line layer data if the sum of the predicted lane line length and the current lane line length is greater than or equal to the set lane line length, where the first length is a length difference between the set lane line length and the current lane line length; and determine a set of the second current lane line data and the first predicted lane line data as the target lane line data.

Alternatively, the obtaining sub-unit is further configured to:
determine a preliminary predicted lane of the vehicle based on the planned path data in response to the sum of the predicted lane line length and the current lane line length being smaller than the set lane line length, extract preliminary predicted lane line layer data corresponding to the preliminary predicted lane from the lane line data, and determine a preliminary predicted lane line length corresponding to the preliminary predicted lane line layer data; accumulate the predicted lane line length and the preliminary predicted lane line length to obtain a total predicted lane line length; determine whether the sum of the total predicted lane line length and the current lane line length is smaller than the set lane line length; in response to the sum of the total predicted lane line length and the current lane line length being smaller than the set lane line length, repeat the following steps of updating the predicted lane line length to be the total predicted lane line length, determining the preliminary predicted lane of the vehicle based on the planned path data, extracting the preliminary predicted lane line layer data corresponding to the preliminary predicted lane from the lane line data, determining the preliminary predicted lane line length corresponding to the preliminary predicted lane line layer data, and accumulating the predicted lane line length and the preliminary predicted lane line length so as to obtain the total predicted lane line length; in response to the sum of the total predicted lane line length and the current lane line length being greater than the set lane line length, obtain the second predicted lane line data with the predicted lane line length from the predicted lane line layer data, and obtain preliminary predicted lane line data with a second length from the preliminary predicted lane line layer data, wherein the second length is the sum of the set lane line length minus the current lane line length and a second predicted lane line length; and determine a set of the second current lane line data, the second predicted lane line data and the preliminary predicted lane line data as the target lane line data.

Alternatively, the obtaining sub-unit is further configured to obtain the second predicted lane line data with the predicted lane line length from the predicted lane line layer data in response to a lane identity corresponding to the preliminary predicted lane being empty, and determine a set of the second current lane line data and the second predicted lane line data as the target lane line data.

Alternatively, the set lane line length is determined according to at least one of the following conditions: a vehicle speed and a road curvature change degree.

The above product may execute the method according to any one of the examples of the disclosure, and has corresponding functional modules for executing the method.

Example 4

Fig. 4 is a block diagram of a structure of a vehicle in Example 4 of the disclosure. As shown in Fig. 4, the vehicle includes a processor 410, a memory 420, an input apparatus 430, and an output apparatus 440. The number of processors 410 in the vehicle may be one or more. Fig. 4 takes one processor 410 as an example. The processor 410, the memory 420, the input apparatus 430 and the output apparatus 440 in the vehicle may be connected by means of a bus or in other modes. Fig. 4 takes a bus connection as an example.

As a computer-readable storage medium, the memory 420 may be set as a storage software program, a computer executable program, and a module, such as program instruction/modules corresponding to a method for extracting a lane line in the example of the disclosure (for example, an obtaining module 310, an extraction module 320 and a fitting module 330 in an apparatus for extracting a lane line). The processor 410 executes various functional applications of the vehicle and data processing by running a software program, an instruction and a module stored in the memory 420, so as to implement the above method for extracting a lane line.

The memory 420 may mainly include a program storage area and a data storage area, wherein the program storage area may store an operating system and an application required for at least one function; and the data storage area may store data, etc. created according to usage of a terminal. Moreover, the memory 420 may include a high-speed random access memory, and may further include a non-volatile memory, for example, at least one magnetic disk memory device, a flash memory device, or other non-volatile solid-state memory devices. In some examples, the memory 420 may further include a memory remotely arranged with respect to the processor 410, and the remote memory may be connected to the vehicle by means of a network. Examples of the network include, but are not limited to, the Internet, enterprise intranets, local area networks, mobile communication networks, and combinations of the above.

The input apparatus 430 may be configured to receive input digital or character information and generate key signal input related to user settings and function control of the vehicle. The output apparatus 440 may include display devices such as a display screen.

Example 5

Example 5 of the disclosure provides a computer-readable storage medium storing a computer program, where the computer program implements the method for extracting a lane line according to all the examples of the disclosure when executed by a processor. The method includes the following steps that a current position point of a vehicle and high-precision map data are obtained, wherein the high-precision map data includes lane line data and planned path data of the vehicle; target lane line data within a set lane line length in front of a lane where the vehicle is located is extracted from the lane line data based on the current position point and the planned path data; and curve fitting is performed on the target lane line data, so as to obtain a lane line.

The computer-readable storage medium may be any combination of one or more computer-readable media. The computer-readable medium may be a computer-readable signal medium or a computer-readable storage medium. For example, the computer-readable storage medium may be, but not limited to, an electronic, magnetic, optical, electromagnetic, infrared, or semiconductor system, apparatus, or device, or any suitable combination of the above. More specific examples (a non-exhaustive list) of the computer-readable storage medium include: an electrical connection with one or more wires, a portable computer disk, a hard disk, a random access memory (RAM), a read-only memory (ROM), an erasable programmable read-only memory (EPROM), a flash memory, an optical fiber, a compact disc read-only memory (CD-ROM), an optical storage device, a magnetic storage device, or any suitable combination of the above. In the disclosure, the computer-readable storage medium may be any tangible medium that includes or stores a program, and the program may be used by or in combination with an instruction execution system, apparatus or device.

The computer-readable signal medium may include a data signal in a baseband or as part of a carrier for transmission, and the data signal carries a computer-readable program code. The transmitted data signal may take many forms, including but not limited to electromagnetic signals, optical signals or any suitable combination of the above. The computer-readable signal medium may further be any computer-readable medium other than the computer-readable storage medium, and the computer-readable medium may send, propagate or transmit a program used by or in combination with an instruction execution system, apparatus or device.

The program code included in the computer-readable medium may be transmitted by any suitable medium, including but not limited to radio, an electric wire, an optical cable, radio frequency (RF), etc., or any suitable combination of the above.

The computer program code for executing an operation of the disclosure may be written in one or more programming languages or their combination. The programming languages include object-oriented programming languages such as Java, Smalltalk, and C++, and conventional procedural programming languages such as "C" or similar programming languages. The program code may be executed entirely on a user computer, executed partially on the user computer, executed as a stand-alone software package, executed partially on the user computer and partially on a remote computer, or executed entirely on the remote computer or a server. In the case that the remote computer is involved, the remote computer may be connected to the user computer through any type of networks, including the local area network (LAN) or the wide area network (WAN), or may be connected to an external computer (for example, through the Internet by means of an Internet service provider).

**Claims**

1. A method for extracting a lane line, comprising:

    obtaining a current position point of a vehicle and high-precision map data, wherein the high-precision map data comprises lane line data and planned path data of the vehicle;
    extracting target lane line data within a set lane line length in front of a lane where the vehicle is located from the lane line data based on the current position point and the planned path data; and
    performing curve fitting on the target lane line data to obtain a lane line.

2. The method as claimed in claim 1, wherein the extracting target lane line data within a set lane line length in front of a lane where the vehicle is located from the lane line data based on the current position point and the planned path data comprises:

extracting current lane line layer data from the lane line data, wherein the current lane line layer data is lane line layer data corresponding to a current lane determined based on the current position point and the planned path data;
determining a distance between the current position point and an ending position point in the current lane line layer data as a current lane line length;
obtaining first current lane line data with the set lane line length from the current lane line layer data in response to the current lane line length being greater than or equal to the set lane line length, to determine the first current lane line data as the target lane line data; and
determining a predicted lane of the vehicle based on the current position point and the planned path data in response to the current lane line length being smaller than the set lane line length, to determine whether a predicted lane identity corresponding to the predicted lane is empty to obtain a determination result, and obtain the target lane line data from the lane line data based on the determination result.

3. The method as claimed in claim 2, wherein the obtaining first current lane line data with the set lane line length from the current lane line layer data comprises:

    determining a projection point corresponding to the current position point in the current lane line layer data, wherein the projection point is a boundary point obtained by projecting the current position point on a current lane boundary line;
    obtaining boundary points contained in the current lane boundary line with the set lane line length and started from the projection point in the current lane line layer data; and
    determining a sequence formed by the boundary points as the first current lane line data.

4. The method as claimed in claim 2, wherein the obtaining the target lane line data from the lane line data based on the determination result comprises:

    obtaining second current lane line data with the current lane line length from the current lane line layer data in response to the determination result indicating that the predicted lane identity is empty, to determine the second current lane line data as the target lane line data; and
    extracting predicted lane line layer data corresponding to the predicted lane from the lane line data in response to the determination result indicating that the predicted lane identity is not empty, to determine a predicted lane line length corresponding to the predicted lane line layer data, and obtain the target lane line data from the predicted lane line layer data based on the predicted lane line length and the current lane line length.

5. The method as claimed in claim 4, wherein the obtain the target lane line data from the predicted lane line layer data based on the predicted lane line length and the current lane line length comprises:

determining whether the sum of the predicted lane line length and the current lane line length is smaller than the set lane line length; obtaining first predicted lane line data with a first length from the predicted lane line layer data in response to determining that the sum of the predicted lane line length and the current lane line length is greater than or equal to the set lane line length, wherein the first length is a length difference between the set lane line length and the current lane line length; and determining a set of the second current lane line data and the first predicted lane line data as the target lane line data.

6. The method as claimed in claim 5, wherein in response to determining that the sum of the predicted lane line length and the current lane line length is smaller than the set lane line length, the method further comprises:

determining a preliminary predicted lane of the vehicle based on the planned path data, to extract preliminary predicted lane line layer data corresponding to the preliminary predicted lane from the lane line data, and determine a preliminary predicted lane line length corresponding to the preliminary predicted lane line layer data; accumulating the predicted lane line length and the preliminary predicted lane line length to obtain a total predicted lane line length; determining whether the sum of the total predicted lane line length and the current lane line length is smaller than the set lane line length; in response to the sum of the total predicted lane line length and the current lane line length being smaller than the set lane line length, repeating the following steps of updating the predicted lane line length to be the total predicted lane line length, determining the preliminary predicted lane of the vehicle based on the planned path data, extracting the preliminary predicted lane line layer data corresponding to the preliminary predicted lane from the lane line data, and determining the preliminary predicted lane line length corresponding to the preliminary predicted lane line layer data; and accumulating the predicted lane line length and the preliminary predicted lane line length, to obtain the total predicted lane line length; in response to the sum of the total predicted lane line length and the current lane line length being greater than or equal to the set lane line length, obtaining second predicted lane line data with the predicted lane line length from the predicted lane line layer data, to obtain preliminary predicted lane line data with a second length from the preliminary predicted lane line layer data, wherein the second length is the sum of the set lane line length minus the current lane line length and a second predicted lane line length, and determine a set of the second current lane line data, the second predicted lane line data and the preliminary predicted lane line data as the target lane line data.

7. The method as claimed in claim 6, wherein before the extracting the preliminary predicted lane line layer data corresponding to the preliminary predicted lane from the lane line data, the method further comprises:

obtaining the second predicted lane line data with the predicted lane line length from the predicted lane line layer data in response to a lane identity corresponding to the preliminary predicted lane being empty; and determining a set of the second current lane line data and the second predicted lane line data as the target lane line data.

8. The method as claimed in any one of claims 1-7, wherein the set lane line length is determined according to at least one of the following conditions: a vehicle speed and a road curvature change degree.

9. An apparatus for extracting a lane line, comprising:

an obtaining module, configured to obtain a current position point of a vehicle and high-precision map data, wherein the high-precision map data comprises lane line data and planned path data of the vehicle; an extraction module, configured to extract target lane line data within a set lane line length in front of a lane where the vehicle is located from the lane line data of the high-precision map data based on the current position point and the planned path data; and a fitting module, configured to perform curve fitting on the target lane line data, so as to obtain a lane line.

10. A vehicle, comprising a memory, a processor, and a computer program stored in the memory and runnable in the processor, wherein the processor implements the method for extracting a lane line as claimed in any one of claims 1-8 when executing the computer program.

11. A computer-readable storage medium, storing a computer program, wherein the computer program implements the method for extracting a lane line as claimed in any one of claims 1-8 when executed by a processor.

Fig. 1

A current position point of a vehicle and high-precision map data are obtained, wherein the high-precision map data includes lane line data and planned path data of the vehicle — S110

Target lane line data within a set lane line length in front of a lane where the vehicle is located is extracted from the lane line data of the high-precision map data based on the current position point and the planned path data — S120

Curve fitting is performed on the target lane line data to obtain a lane line — S130

Fig. 2

A current position point of a vehicle and high-precision map data are obtained, wherein the high-precision map data includes lane line data and planned path data of the vehicle — S210

Current lane line layer data is extracted from the lane line data, wherein the current lane line layer data is lane line layer data corresponding to a current lane determined based on the current position point and the planned path data — S220

A distance between the current position point and an ending position point in the current lane line layer data is determined as a current lane line length — S230

First current lane line data with a set lane line length is obtained from the current lane line layer data in response to the current lane line length being greater than or equal to the set lane line length, and the first current lane line data is determined as target lane line data — S240

A predicted lane of the vehicle is determined based on the current position point and the planned path data in response to the current lane line length being smaller than the set lane line length, whether a predicted lane identity corresponding to the predicted lane is empty is determined to obtain a determination result, and the target lane line data is obtained from the lane line data based on the determination result — S250

Curve fitting is performed on the target lane line data to obtain the lane line — S260

Fig. 3

310

320

330

| Obtaining module | — | Extraction module | — | Fitting module |

Fig. 4

| Memory | 420

| Input apparatus | 430

| Output apparatus | 440

| Processor | 410

## INTERNATIONAL SEARCH REPORT

| International application No. |
|---|
| **PCT/CN2022/133480** |

| A. | CLASSIFICATION OF SUBJECT MATTER |
|---|---|
| | G06V20/58(2022.01)i |

According to International Patent Classification (IPC) or to both national classification and IPC

| B. | FIELDS SEARCHED |
|---|---|

Minimum documentation searched (classification system followed by classification symbols)

G06V

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, CNKI, IEEE: 车道线, 高精度地图, 提取, 获取, 位置, 路径, 路线, 长度, 距离, 拟合, 图层, 预测, extract, lane line, vehicle, position, curve fitting, high-precision map

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114092909 A (CHINA FAW CO., LTD.) 25 February 2022 (2022-02-25) claims 1-11 | 1-11 |
| X | CN 108007471 A (NAVINFO CO., LTD.) 08 May 2018 (2018-05-08) description, paragraphs [0027]-[0092], and figures 1-10 | 1, 8-11 |
| A | CN 111815742 A (MOGU VEHICLE NETWORKING INFORMATION TECHNOLOGY CO., LTD.) 23 October 2020 (2020-10-23) entire document | 1-11 |
| A | US 2019130182 A1 (HERE GLOBAL B.V.) 02 May 2019 (2019-05-02) entire document | 1-11 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 February 2023** | **16 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

| | International application No. |
|---|---|
| | **PCT/CN2022/133480** |

| Patent document cited in search report | | | Publication date (day/month/year) | Patent family member(s) | Publication date (day/month/year) |
|---|---|---|---|---|---|
| CN | 114092909 | A | 25 February 2022 | None | |
| CN | 108007471 | A | 08 May 2018 | None | |
| CN | 111815742 | A | 23 October 2020 | None | |
| US | 2019130182 | A1 | 02 May 2019 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111385472X